# EUROPEAN PATENT APPLICATION

(11) **EP 1 280 087 A1**
(43) Date of publication of application: **29.01.2003**
(21) Application number: 02254827.5
(22) Date of filing: 09.07.2002
(51) Int. Cl.: G06F 17/60

(54) **Advertisement selection engine for placing micro-advertising**

(30) Priority: 26.07.2001 US 916970
(71) Applicant: Hewlett-Packard Company, Palo Alto, CA 94304 (US)
(72) Inventor: Castle, Daniel C., Monmouth, OR 97361 (US)
(74) Representative: Jackson, Richard Eric

(57) **Abstract**

An information content delivery service determines the white space remaining on a page of requested information content (step 310). The selection engine selects a micro-advertisement or a plurality of micro-advertisements based on criteria such as the space available, the value assigned to each advertisement, and the frequency that the consumer has seen the advertisement (step 315). The micro-advertisements are placed on the page in the available space (step 325) and the page is transmitted to the consumer (step 365) for viewing and/or printing.

## Description

### Technical Field

The present invention relates generally to Internet communications. More particularly, the present invention relates to Internet advertising.

### Background of the Invention

Along with increased Internet usage, Internet advertising has experienced a tremendous increase as well. Internet users have come to expect free access to information and other products in return for being exposed to advertising. Typically, this advertising takes the form of hyper-links of advertisement graphics on the World Wide Web page being viewed by the consumer. Additionally, the advertisements can be transmitted directly to the individual via e-mails.

Some Internet product and service advertisers are struggling financially due to low response rates to their advertisements. This problem will probably increase due to recent advances in information delivery that is tailored to the requesting consumer.

Recent information content services allow consumers to request and schedule the delivery of information to the consumer's computer. This information content is accumulated and formatted by the service provider's server and then sent to the consumer on the desired schedule. The problem for advertisers is that additional advertisement space is taken up by trying to fit information content onto a page. For example, if the consumer requested a page of information content with only four comic strips when the page template allows five comic strips, unused white space is left on the page.

There is a resulting unforeseen need for a method to improve the Internet advertisement of products and/or services without disturbing the Web page's content by using all available white space on the page.

### Summary of the Invention

The present invention encompasses a process for placing a micro-advertisement on a page comprising information content. The selection engine determines available space on the page for the micro-advertisement. The available space must not interfere with the information content.

The micro-advertisement is selected from a plurality of micro-advertisements and placed on the page in the available space. The page is then transmitted to the consumer either over the Internet or some other network.

### Brief Description of the Drawings

FIG. 1 shows a sample Internet news page without advertising space available.
FIG. 2 shows an Internet new page of the present invention incorporating micro-advertising.
FIG. 3 shows a flowchart of the advertisement selection engine of the present invention for placing micro-advertising.
FIG. 4 shows a block diagram of a World Wide Web server in accordance with the micro-advertisement selection engine of the present invention.
FIG. 5 shows a flowchart for a Web server for delivering information content and micro-advertising to consumers using an information delivery service.

### Detailed Description of the Preferred Embodiment

The advertisement selection engine of the present invention provides Internet advertisers with the ability to fit smaller advertisements into normally wasted white space on a page of information content. This is accomplished by inserting an advertiser's symbol, logo, or other advertisement that has a specific aspect ratio to fit the unused space.

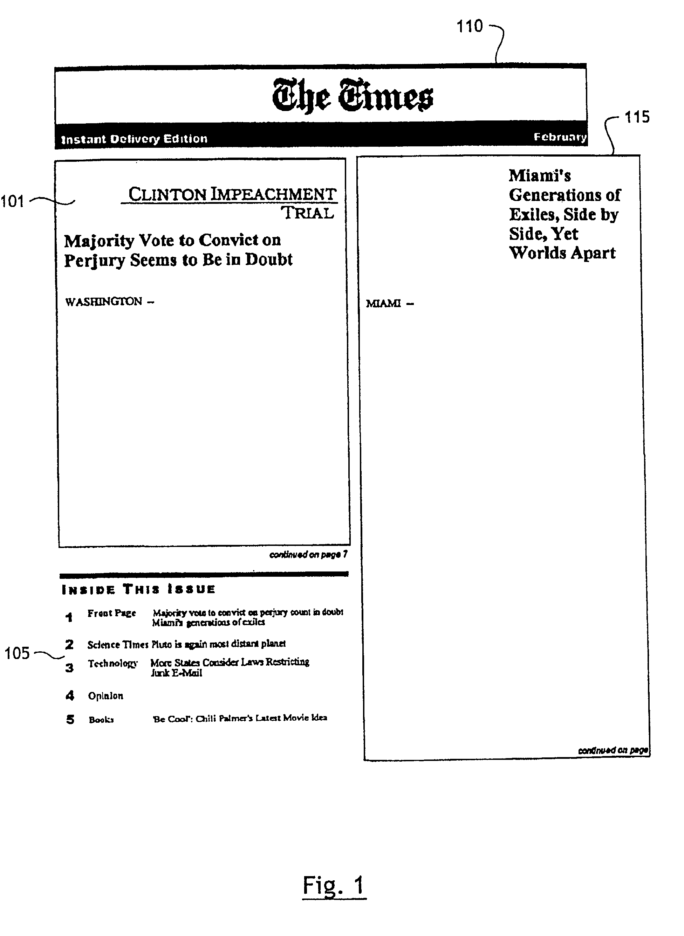

FIG. 1 illustrates a typical page of information content that would be requested by a consumer using an information deliver service. In this example, the information content is news related is comprises a title section (110), news content (101 and 115), and a table of contents (105). Alternate embodiments have other types and styles of information content.

In the example illustrated in FIG. 1, there is no remaining space for a normal size advertisement to fit on the page without displacing some of the information content. However, by displacing the information content, the page would have to be reformatted to fit both the advertisements and information content or additional pages would have to be added. Both solutions would require more processing time and might even cause dissatisfaction on the part of the consumer.

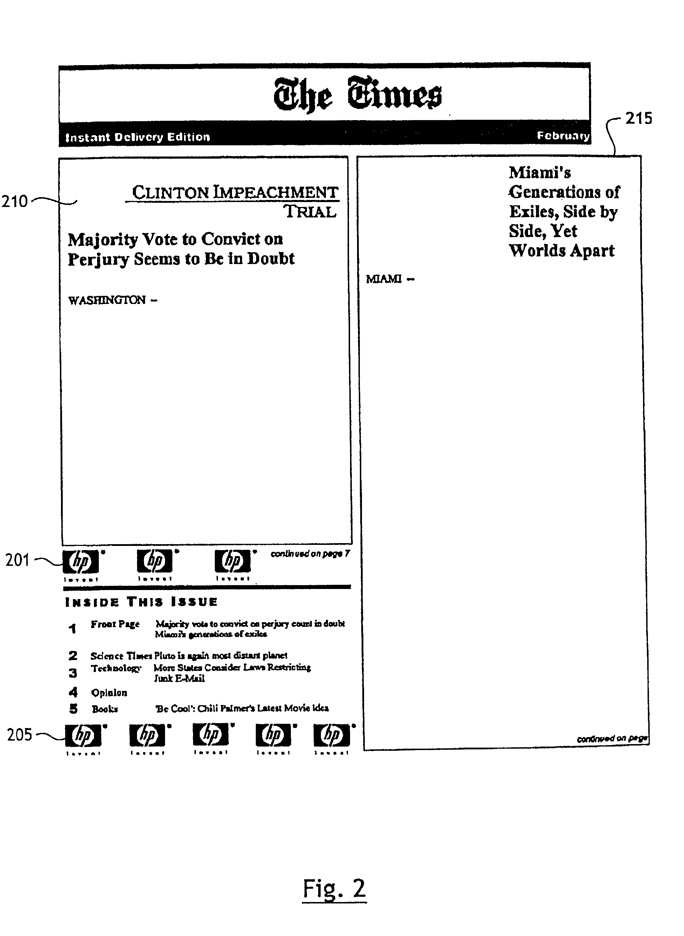

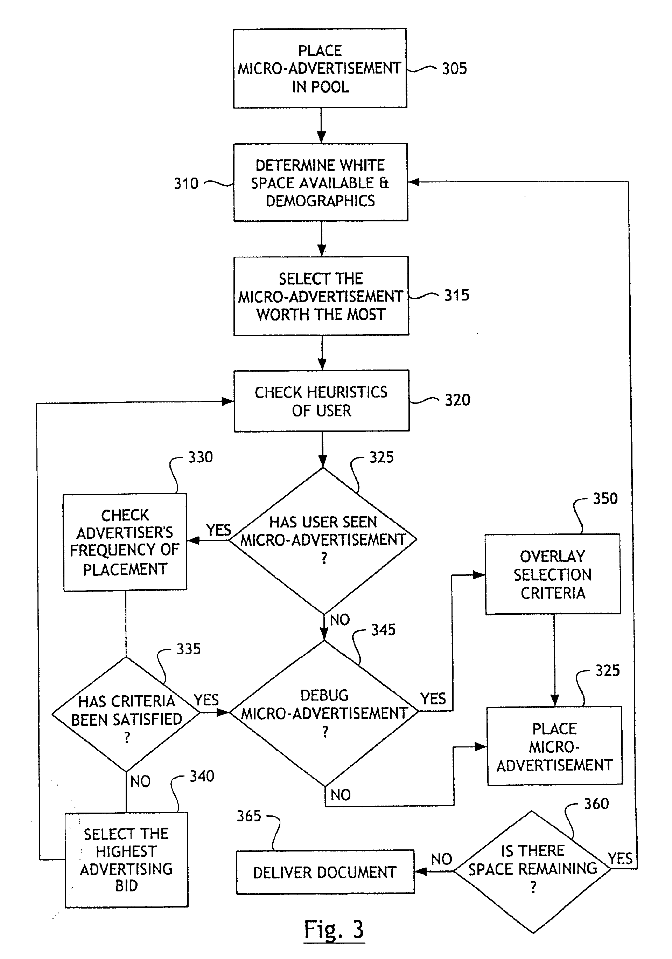

FIG. 2 illustrates the results of the micro-advertisement selection and placement engine of the present invention. The engine, as discussed subsequently in the flowchart of FIG. 3, selected the two locations (201 and 205) where micro-advertising would fit without interfering with the information content (210 and 215).

FIG. 3 illustrates the micro-advertisement selection and placement engine of the present invention. Micro-advertisements are placed in the advertising pool (step 305) for storage. The advertisement pool may be on a Web server operated by the service that handles the placement of the information content. The advertisement pool may also be in any other location that is accessible by the Web server.

The micro-advertisements that fit the white space available around the information content and also fit the demographics are chosen from this pool (step 310). The demographics, in the preferred embodiment, relate to the consumer requesting the information content. In an alternate embodiment, the demographics relate to the information content itself.

From the micro-advertisements selected in the last step (step 310), the micro-advertisement that is the most valuable according to some predefined criteria is selected (step 315). In the preferred embodiment, the criteria relates to which advertiser is paying the most for the advertisement space. Other embodiments use other forms of criteria such as which advertiser pays its bills on time or which advertiser has a more closely related product to the information content. Other embodiments use other forms of predetermined criteria.

The heuristics of the consumer requesting the information content are checked (step 320). This step involves checking the consumer's history of downloads to determine which advertisements have been viewed, in what information content the consumer is most interested, the consumer's personal data such as income, profession, and sex. Other embodiments use other forms of heuristic data.

If the consumer has seen the micro-advertisement before (step 325), the advertiser's rules for frequency of advertisement placement are checked (step 330). Most advertisers have placement criteria that determines how often they wish their advertisements exposed to a particular consumer so that the consumer is not overwhelmed by one advertisement. This may have a detrimental effect on the consumer's desire to purchase that advertiser's product or service.

If the frequency of micro-advertisement placement criteria has not been met (step 335), another micro-advertisement is selected that has the next highest advertising bid (step 340). If the consumer has not recently seen the micro-advertisement (step 325) or the frequency of micro-advertisement placement criteria has been met (step 335), an option is given to debug the micro-advertisement (step 345) to make sure it is an appropriate advertisement focused on the consumer's profile.

If it is desired to debug the micro-advertisement, the selection criteria is overlaid on the micro-advertisement or otherwise displayed (step 350) to the marketing person or other person performing the debugging. The marketing person or person performing the debugging then places the micro-advertisement after the debugging operation is complete (step 355).

If there is advertising space remaining (step 360) after placement of the last micro-advertisement, the process goes back to finding micro-advertisements that fit the available space and demographics (step 310). If no space remains after placement of the last micro-advertisement (step 360), the document is delivered to the consumer (step 365).

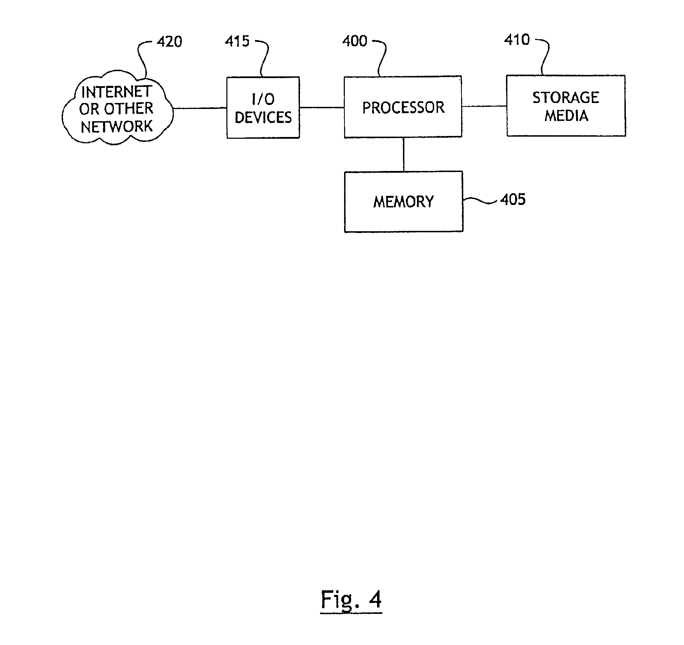

FIG. 4 illustrates a block diagram of a Web server of the present invention. The server is comprised of a processor (400) for controlling the server. The memory (405), coupled to the processor (400), is responsible for temporarily holding data for access by the various computers and mobile devices that are coupled to the Internet or other network. Storage media (410), coupled to the processor (400) can include hard drives, floppy drives, and any other media for storing data in a more permanent fashion.

The Input/Output (I/O) devices (415) are used to couple the server to the Internet or any other network (420) coupled to the server. The I/O devices (415) include modems, Ethernet cards, and any other devices required to couple the server to the network. The I/O devices (415) also include displays, monitors, keyboards, and other devices required by operators who interact with the server.

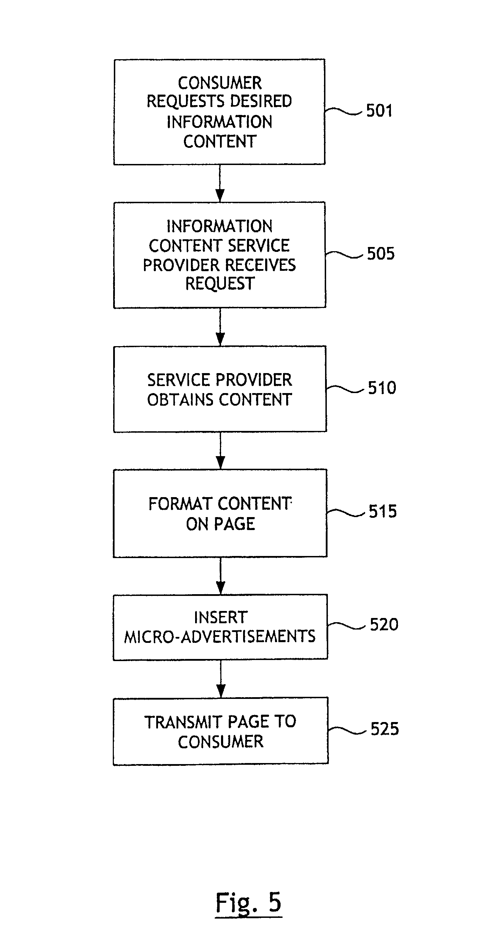

FIG. 5 illustrates a flowchart for a process used by an information delivery service provider with a Web server to provide information content and advertising to a consumer. The information content may be stored on the service provider's Web server or accumulated from other sources that generate information. For example, one such source of information content is CNN.COM.

The consumer first requests certain information content from the service provider (step 501). The service provider receives the request and processes it to determine where to accumulate the information content requested (step 505). The service provider then accumulates the content either from the various information sources or from the information storage of the service provider's Web server (step 510).

The information content is then formatted on the page (step 515). The above-described advertisement selection engine then determines the available white space and which micro-advertisements to place on the page (step 520).

The page with the information content and the micro-advertisements is then transmitted to the consumer (step 525). The page, in the preferred embodiment, is transmitted over the Internet to the consumer's computer that is running a client process. Alternate embodiments send the page over networks other than the Internet.

While the above-described invention discusses only a page of information content for purposes of clarity, obviously the present invention applies to an unlimited number of pages. The present invention also encompasses any information content from any source as well as any size of micro-advertisement that fits in the available white spaces without interfering with the information content.

In summary, the advertisement selection engine of the present invention can position micro-advertisements in white space remaining after information content has been placed on a page. This permits advertisers to take advantage of all available space on a page while not interrupting the consumers enjoyment of the information content. This provides much needed revenue to the advertiser.

Numerous modifications and variations of the present invention are possible in light of the above teachings. It is therefore to be understood that within the scope of the appended claims, the invention may be practiced otherwise than as specifically described herein.

## Claims

1. A method for placing a micro-advertisement on a page comprising information content, the method comprising the steps of:
determining available space on the page for the micro-advertisement (step 310), the available space not interfering with the information content;
selecting the micro-advertisement (step 315), from a plurality of micro-advertisements, to place on the page; and
placing the micro-advertisement on the page in the available space (step 325).

2. The method of claim 1 and further including the step of transmitting the page to a consumer (step 365).

3. The method of claim 1 and further including the step of transmitting the page to a consumer over the Internet.

4. The method of claim 2 wherein the step of selecting includes the step of determining the consumer's heuristics (step 320).

5. The method of claim 2 wherein the step of selecting includes the step of determining a value for the micro-advertisement (step 315).

6. A system for placing micro-advertisements on a page comprising information content intended for a consumer, the system comprising:
a processor (400) that controls processes for placing micro-advertisements in response to micro-advertisement selection criteria;
memory (405) coupled to the processor, the memory storing the micro-advertisement selection criteria used by the processor;
storage media (410) coupled to the processor, the storage media storing the page of information content, a plurality of micro-advertisements, and a plurality of micro-advertisement selection criteria associated with each micro-advertisement; and
input/output apparatuses (415) coupled to the processor, the input/output apparatuses comprising means for transmitting the page comprising the information content and the micro-advertisement.

7. The system of claim 6 wherein the storage media (410) comprises means for storing consumer profiles.

8. The system of claim 6 wherein the input/output apparatuses (415) comprise an Internet interface that couples the system to the Internet.

9. The system of claim 6 wherein the storage media (410) comprises a disk drive for storing the page of information content, the plurality of micro-advertisements, and the plurality of micro-advertisement selection criteria associated with each micro-advertisement.
